(19) Europäisches Patentamt
European Patent Office
Office européen des brevets

(11) **EP 4 064 725 B1**

(12) **FASCICULE DE BREVET EUROPEEN**

(45) Date de publication et mention de la délivrance du brevet:
**17.07.2024 Bulletin 2024/29**

(21) Numéro de dépôt: **22162909.0**

(22) Date de dépôt: **18.03.2022**

(51) Classification Internationale des Brevets (IPC):
*H04R 3/00* *(2006.01)*   *G01S 3/802* *(2006.01)*
*G10L 25/51* *(2013.01)*   *H04R 5/027* *(2006.01)*
*H04R 1/40* *(2006.01)*   *G10L 15/28* *(2013.01)*

(52) Classification Coopérative des Brevets (CPC):
**H04R 3/00; G01S 3/802;** G10L 15/28; H04R 1/406;
H04R 3/005; H04R 5/027; H04R 2201/401

(54) **PROCEDE DE SELECTION DYNAMIQUE DE MICROPHONES**

DYNAMISCHES AUSWAHLVERFAHREN VON MIKROFONEN

METHOD FOR DYNAMIC SELECTION OF MICROPHONES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2021 FR 2102859**

(43) Date de publication de la demande:
**28.09.2022 Bulletin 2022/39**

(73) Titulaire: **Sagemcom Broadband SAS**
**92270 Bois-Colombes (FR)**

(72) Inventeurs:
• **BERGER, Jérôme**
**92500 RUEIL MALMAISON (FR)**
• **NEDELCU, Radu**
**92500 RUEIL MALMAISON (FR)**

(74) Mandataire: **Cabinet Boettcher**
**5, rue de Vienne**
**75008 Paris (FR)**

(56) Documents cités:
**WO-A1-01/31972**   **CN-A- 111 856 402**
**KR-A- 20190 104 950**

**Description**

L'invention concerne le domaine des équipements électroniques qui comportent des microphones et qui peuvent être utilisés pour mettre en oeuvre un ou plusieurs procédés de reconnaissance vocale.

ARRIERE PLAN DE L'INVENTION

Certains équipements électroniques connectés récents, par exemple des enceintes connectées, comprennent des microphones et peuvent être utilisés pour mettre en oeuvre le procédé de reconnaissance vocale d'un assistant personnel virtuel.

Un tel équipement électronique comprend classiquement un module de détection qui acquiert les signaux audio produits par les microphones. Lorsque le module de détection de l'équipement électronique détecte qu'un mot-clef, destiné à activer le procédé de reconnaissance vocale, a été prononcé par un utilisateur, les signaux audio produits par les microphones sont transmis à un module de reconnaissance vocale. Le procédé de reconnaissance vocale est alors mis en œuvre par le module de reconnaissance vocale qui analyse les signaux audio et détecte les commandes vocales émises par l'utilisateur. L'équipement électronique effectue alors les actions correspondant aux commandes vocales.

Ainsi, par exemple, le mot-clef « *Alexa* » permet d'activer le procédé de reconnaissance vocale mis en oeuvre par « *Alexa* ® » *d'Amazon* ®, et le mot-clef « *OK Google* » permet d'activer le procédé de reconnaissance vocale mis en œuvre par l' « *Assistant Google* ® ».

Le module de reconnaissance vocale peut être intégré localement dans l'équipement électronique ou bien peut être déporté dans un ou des équipements externes distincts de l'équipement électronique, par exemple dans un ou des serveurs distants (sur le *cloud)*. Dans cette dernière configuration, les signaux audio sont transmis par l'équipement électronique au module de reconnaissance vocale via un réseau de communication (Internet), et les commandes vocales sont transmises par le module de reconnaissance vocale à l'équipement électronique.

Il se peut qu'un équipement électronique puisse être utilisé pour mettre en oeuvre deux procédés de reconnaissance vocale distincts. Il se peut aussi que ces deux procédés de reconnaissance vocale nécessitent un nombre de microphones différent. Ainsi, le procédé de reconnaissance vocale *d'Alexa* ® nécessite six microphones alors que celui de *l'Assistant Google* @ ne nécessite que deux microphones. On connaît par exemple une enceinte connectée qui comprend six microphones et qui peut être utilisée pour mettre en oeuvre les deux procédés de reconnaissance vocale de ces assistants personnels virtuels.

Les six microphones sont donc toujours présents dans l'enceinte connectée. C'est l'utilisateur qui choisit le procédé de reconnaissance vocale qu'il souhaite utiliser (en prononçant le mot-clef approprié) et, dans le cas où le procédé de reconnaissance vocale de *l'Assistant Google* ® est choisi, l'enceinte connectée doit sélectionner les deux microphones à utiliser (parmi les six microphones) pour mettre en oeuvre ledit procédé de reconnaissance vocale.

Le document KR 2019 0104950 A concerne un procédé de suivi de l'emplacement d'un individu en train de parler, mis en oeuvre dans un robot mobile.

OBJET DE L'INVENTION

L'invention a pour objet, dans un équipement électronique qui comporte un nombre total de microphones et qui est utilisé pour mettre en oeuvre un procédé de reconnaissance vocale ne nécessitant qu'un nombre réduit de microphones, de sélectionner les microphones qui permettent de maximiser l'efficacité du procédé de reconnaissance vocale.

RESUME DE L'INVENTION

En vue de la réalisation de ce but, on propose un procédé de sélection, mis en oeuvre dans un équipement électronique qui comporte un ensemble de microphones comprenant un nombre total de microphones et qui peut être utilisé pour mettre en oeuvre un premier procédé de reconnaissance vocale nécessitant un premier nombre de premiers microphones inférieur strictement au nombre total de microphones, le premier nombre étant égal à deux, le procédé de sélection comprenant les étapes de :

- acquérir et mémoriser, pour chaque microphone de l'ensemble de microphones, un premier signal audio de référence produit par ledit microphone à partir d'une réception par l'ensemble de microphones d'un premier signal sonore de référence, le premier signal sonore de référence comportant un premier mot-clef activant le premier procédé de reconnaissance vocale ;
- analyser les premiers signaux audio de référence pour produire au moins un paramètre directionnel représentatif d'une direction d'arrivée du premier signal sonore de référence ;
- sélectionner en fonction du ou des paramètres directionnels, parmi l'ensemble de microphones, les premiers microphones qui permettent de maximiser une efficacité du premier procédé de reconnaissance vocale, l'étape d'analyse comprenant les étapes de :
- déterminer, en utilisant les premiers signaux audio de référence produits par l'ensemble de microphones, la direction d'arrivée du premier signal sonore de référence ;
- définir parmi l'ensemble de microphones des paires de microphones et, pour chaque paire de microphones :

∘ configurer un module de formation de voies utilisant les microphones de ladite paire de microphones pour focaliser le module de formation de voies dans la direction d'arrivée ;

∘ appliquer en entrée du module de formation de voies les premiers signaux audio de référence produits par les deux microphones de ladite paire de microphones, et acquérir un signal de sortie du module de formation de voie ;

∘ appliquer un procédé de détection visant à détecter le premier mot-clef dans le signal de sortie, et conférer à la paire de microphones un score de confiance quantifiant une probabilité de détection du premier mot-clef ;

et l'étape de sélection consistant à sélectionner comme premiers microphones les deux microphones de la paire de microphones qui présente le score de confiance le plus élevé.

Le procédé de sélection selon l'invention sélectionne donc les premiers microphones en fonction de la direction d'arrivée du premier signal sonore de référence (qui comporte un mot-clef permettant d'activer le premier procédé de reconnaissance vocale). La sélection est donc une sélection dynamique qui dépend de la position de l'utilisateur lorsqu'il prononce le mot-clef et qui permet donc de maximiser l'efficacité du premier procédé de reconnaissance vocale en améliorant son anisotropie.

On propose aussi un procédé de sélection tel que précédemment décrit, dans lequel les deux microphones de chaque paire de microphones présentent un même écartement.

On propose aussi un procédé de sélection tel que précédemment décrit, dans lequel au moins trois microphones de l'ensemble de microphones ne sont pas alignés.

On propose aussi un procédé de sélection tel que précédemment décrit, dans lequel l'équipement électronique peut aussi être utilisé pour mettre en oeuvre un deuxième procédé de reconnaissance vocale nécessitant un deuxième nombre de deuxièmes microphones égal au nombre total de microphones.

On propose aussi un procédé de sélection tel que précédemment décrit, dans lequel le premier procédé de reconnaissance vocale est mis en œuvre dans un ou des équipements externes distincts de l'équipement électronique, le procédé de sélection comprenant l'étape, suite à la sélection des premiers microphones, de transmettre au ou aux équipements externes uniquement des premiers signaux audio de commande produits par lesdits premiers microphones suite aux premiers signaux audio de référence, lesdits premiers signaux audio de commande étant utilisés par le ou les équipements externes pour mettre en œuvre le premier procédé de reconnaissance vocale.

On propose de plus un équipement électronique comportant un composant de traitement et un ensemble de microphones comprenant un nombre total de microphones, l'équipement électronique étant agencé pour être utilisé pour mettre en oeuvre un premier procédé de reconnaissance vocale nécessitant un premier nombre de premiers microphones inférieur strictement au nombre total de microphones, le composant de traitement étant agencé pour mettre en oeuvre le procédé de sélection tel que précédemment décrit.

On propose aussi un équipement électronique tel que précédemment décrit, l'équipement électronique étant une enceinte connectée.

On propose aussi un programme d'ordinateur comprenant des instructions qui conduisent le composant de traitement de l'équipement électronique tel que précédemment décrit à exécuter les étapes du procédé de sélection tel que précédemment décrit.

On propose en outre un support d'enregistrement lisible par ordinateur, sur lequel est enregistré le programme d'ordinateur tel que précédemment décrit.

L'invention sera mieux comprise à la lumière de la description qui suit de modes de mise en oeuvre particuliers non limitatifs de l'invention.

BREVE DESCRIPTION DES DESSINS

Il sera fait référence aux dessins annexés parmi lesquels :

[Fig. 1] la figure 1 représente schématiquement une enceinte connectée dans laquelle est mis en oeuvre le procédé de sélection selon l'invention ;

[Fig. 2] la figure 2 représente quatre diagrammes de sensibilité associés chacun à une disposition distincte de microphones, et comprenant chacun trois courbes obtenues par la mise en oeuvre d'un procédé de formation de voies focalisé selon trois directions distinctes ;

[Fig. 3] la figure 3 représente des étapes du procédé de sélection selon un premier mode de mise en oeuvre ne faisant pas partie de l'invention ;

[Fig. 4] la figure 4 représente une paire de microphones et la direction d'arrivée d'un premier signal sonore de référence ;

[Fig. 5] la figure 5 représente des étapes du procédé de sélection selon un deuxième mode de mise en oeuvre ne faisant pas partie de l'invention ;

[Fig. 6] la figure 6 représente quatre diagrammes de sensibilité associés à deux dispositions distinctes de microphones et à deux directions de focalisation d'un procédé de formation de voies, chaque diagramme de sensibilité comprenant trois courbes obtenues par la mise en oeuvre du procédé de formation de voies suite à la sélection de trois paires de microphones distinctes ;

[Fig. 7] la figure 7 représente des étapes du procédé de sélection selon un mode de mise en œuvre de l'invention.

## DESCRIPTION DETAILLEE DE L'INVENTION

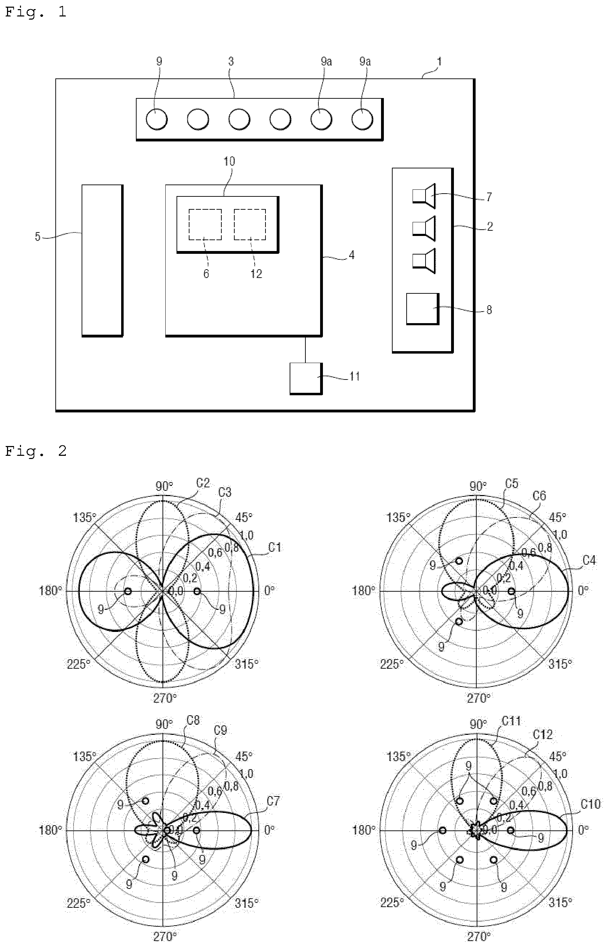

En référence à la figure 1, l'invention est ici mise en œuvre dans une enceinte connectée 1 qui comprend un dispositif de restitution audio 2, un ensemble de microphones 3, un module de traitement 4, un module de communication 5 et un module de détection 6.

Le dispositif de restitution audio 2 comprend une pluralité de haut-parleurs 7 ainsi que des composants 8 agencés pour traiter et transmettre des signaux audio à restituer aux haut-parleurs.

L'ensemble de microphones 3 comprend un nombre total de microphones 9, ici égal à six. Les six microphones 9 sont ici disposés en cercle.

Le module de traitement 4 comprend un composant de traitement 10 qui est adapté à exécuter des instructions d'un programme pour mettre en oeuvre le procédé de sélection selon l'invention. Le programme est stocké dans une mémoire 11 reliée ou intégrée dans le composant de traitement 10. Le composant de traitement 10 est par exemple un processeur, un microcontrôleur, un DSP (pour *Digital Signal Processor*, que l'on peut traduire par « processeur de signal numérique »), ou bien un circuit logique programmable tel qu'un FPGA (pour *Field Programmable Gate Arrays*) ou un ASIC (pour *Application Spécifie Integrated Circuit)* .

Le module de communication 5 met en oeuvre une liaison sans fil utilisant ici un protocole Wi-Fi. Le module de communication 5 permet de relier l'enceinte connectée 1 à une passerelle résidentielle située dans l'habitation de l'utilisateur de l'enceinte connectée 1. L'enceinte connectée 1 peut ainsi être connectée à un réseau de communication (par exemple Internet) via son module de communication 5 et la passerelle résidentielle.

On note que la liaison pourrait être une autre liaison sans fil (par exemple une liaison *Bluetooth* @), ou bien une liaison filaire.

Le module de détection 6 est ici programmé dans le composant de traitement 10. Le module de détection 6 acquiert les signaux audio produits par les microphones 9 de l'ensemble de microphones 3.

L'enceinte connectée 1 peut être utilisée pour mettre en oeuvre deux procédés de reconnaissance vocale distincts, appartenant chacun à un assistant personnel virtuel distinct.

Le premier procédé de reconnaissance vocale est activé par la détection d'un premier mot-clef par le module de détection 6. Le premier procédé de reconnaissance vocale nécessite un premier nombre de premiers microphones 9a inférieur strictement au nombre total de microphones 9. Le premier nombre est ici égal à deux. Le premier procédé de reconnaissance vocale est mis en oeuvre dans un premier module de reconnaissance vocale intégré dans un ou plusieurs premiers serveurs du *cloud.*

Le deuxième procédé de reconnaissance vocale, appartenant à un deuxième assistant personnel virtuel, est activé par la détection d'un deuxième mot-clef par le module de détection 6. Le deuxième procédé de reconnaissance vocale nécessite six microphones 9, c'est-à-dire ici tous les microphones 9 de l'ensemble de microphones 3. Le deuxième procédé de reconnaissance vocale est mis en oeuvre dans un deuxième module de reconnaissance vocale intégré dans un ou plusieurs deuxièmes serveurs du *cloud.*

Lorsque le module de détection 6 détecte le premier mot-clef, les deux premiers microphones 9a capturent des signaux sonores de commande prononcés par l'utilisateur et produisent des premiers signaux audio de commande. Le module de communication 5 transmet les premiers signaux audio de commande à la passerelle résidentielle et au premier module de reconnaissance vocale via le réseau de communication.

Le premier module de reconnaissance vocale met alors en œuvre le premier procédé de reconnaissance vocale et les commandes vocales prononcées par l'utilisateur sont détectées et interprétées puis retransmises à l'enceinte connectée 1.

Le premier module de reconnaissance vocale met en oeuvre un premier procédé de formation de voies qui lui permet de focaliser la direction dans laquelle il écoute et d'ignorer les sons provenant d'une direction autre que celle de l'utilisateur (on parle de « *beamforming* » en anglais).

Lorsque le module de détection 6 détecte le deuxième mot-clef, les six microphones 9 capturent les signaux sonores de commande prononcés par l'utilisateur et produisent des deuxièmes signaux audio de commande. Cette fois, le deuxième procédé de formation de voies est réalisé dans l'enceinte connectée 1. L'enceinte connectée 1 produit un signal unique qui est envoyé seul au deuxième module de reconnaissance vocale (sur le ou les deuxièmes serveurs) . Le deuxième module de reconnaissance vocale met alors en oeuvre le deuxième procédé de reconnaissance vocale et les commandes vocales prononcées par l'utilisateur sont détectées et interprétées puis retransmises à l'enceinte connectée 1. Bien sûr, le deuxième procédé de formation de voies pourrait aussi être réalisé par le ou les deuxièmes serveurs (comme c'est le cas pour le premier procédé de reconnaissance vocale qui est réalisé par le ou les premiers serveurs).

On note que plus le nombre de microphones utilisé par le procédé de reconnaissance vocale est élevé et plus la puissance de calcul nécessaire pour traiter les signaux audio sera importante mais plus le procédé sera efficace pour ignorer les perturbations.

La figure 2 permet d'illustrer de manière générale le fonctionnement du mécanisme de formation de voies.

La figure 2 comprend quatre graphiques qui montrent chacun une vue de dessus d'une disposition usuelle distincte de microphones 9, et qui comprennent chacun un diagramme de sensibilité correspondant à la disposition en question.

Chaque diagramme de sensibilité comprend trois courbes obtenues par la mise en oeuvre d'un procédé de formation de voies focalisé selon trois directions distinctes : 0°, 45° et 90°.

Le diagramme de sensibilité en haut à gauche de la figure 2 correspond à une disposition de microphones dans laquelle deux microphones 9 sont situés de part et d'autre du centre du graphique.

Le diagramme de sensibilité en haut à droite de la figure 2 correspond à une disposition de microphones dans laquelle trois microphones sont disposés en triangle.

Le diagramme de sensibilité en bas à gauche de la figure 2 correspond à une disposition de microphones dans laquelle quatre microphones sont disposés en « *trilium* » (c'est-à-dire trois microphones disposés en triangle et un quatrième microphone au centre).

Le diagramme de sensibilité en bas à droite de la figure 2 correspond à une disposition de microphones dans laquelle six microphones sont disposés en cercle en étant régulièrement répartis.

Lorsque le module de reconnaissance vocale est configuré pour écouter dans la direction 0°, on voit sur la courbe C1 que le module de reconnaissance vocale a une sensibilité égale à 1 dans la direction 0° puis que la sensibilité décroit progressivement jusqu'à une sensibilité de 0 vers 90° avant de remonter jusqu'à 0,9 à 180°. Par conséquent, le module de reconnaissance vocale entendra bien les sons provenant de la direction 0° (direction choisie), ne sera pas perturbé par les sons provenant de la direction 90°, mais risque d'être perturbé par les sons provenant de la direction 180° (direction opposée à la direction choisie) .

Lorsque le module de reconnaissance vocale est configuré pour écouter dans la direction 90°, on voit sur la courbe C2 un comportement similaire mais avec des lobes beaucoup plus étroits. Par conséquent, le module de reconnaissance vocale sera moins perturbé par des sons provenant de directions proches de la direction choisie.

La courbe C3 correspond à une configuration pour écouter dans la direction 45°.

On retrouve aussi sur le diagramme en haut à droite la courbe C4 correspondant à une configuration pour écouter dans la direction 0°, la courbe C5 correspondant à une configuration pour écouter dans la direction 90°, la courbe C6 correspondant à une configuration pour écouter dans la direction 45°.

On retrouve aussi sur le diagramme en bas à gauche la courbe C7 correspondant à une configuration pour écouter dans la direction 0°, la courbe C8 correspondant à une configuration pour écouter dans la direction 90°, la courbe C9 correspondant à une configuration pour écouter dans la direction 45°.

On retrouve aussi sur le diagramme en bas à droite la courbe C10 correspondant à une configuration pour écouter dans la direction 0°, la courbe C11 correspondant à une configuration pour écouter dans la direction 90°, la courbe C12 correspondant à une configuration pour écouter dans la direction 45°.

Les diagrammes de la figure 2 qui correspondent à l'enceinte connectée 1 sont les diagrammes d'en haut à gauche et d'en bas à droite puisque, comme on l'a vu, le premier procédé de reconnaissance vocale utilise deux premiers microphones 9a et le deuxième procédé de reconnaissance vocale utilise six microphones 9.

Le procédé de formation de voies combine les différents signaux provenant des microphones pour obtenir un unique signal de sortie combiné selon la formule suivante :

$$x(t) = \sum_{i=1}^{N} g_i x_i(t - \delta_i),$$

où :

- N est le nombre de microphones utilisé ;
- $x_i(t)$ est le signal audio produit par le microphone i ;
- $g_i$ et $\delta_i$ sont un gain et un retard appliqués au signal audio produit par le microphone i ;
- x(t) est le signal de sortie.

Le choix des coefficients $g_i$ et $\delta_i$ permet de déterminer la direction dans laquelle le module de reconnaissance vocale focalise son écoute.

Afin de choisir la direction dans laquelle le procédé de formation de voies focalise son écoute, le module de reconnaissance vocale utilise généralement un procédé de détection de la direction d'arrivée, ou « *DoA* » (pour « *Direction of Arrival* » en anglais). Ce procédé mesure les retards de réception du signal sonore par les différents microphones 9, qui résultent de la différence de temps de propagation du signal sonore depuis l'utilisateur vers chaque microphone 9, et analyse ces retards pour déterminer la direction d'arrivée du signal sonore. Plusieurs méthodes d'analyse peuvent être utilisées, parmi lesquelles on trouve une méthode utilisant un périodogramme, une méthode utilisant l'algorithme MUSIC (pour « *Multiple SIgnal Classification* »)*,* une méthode utilisant l'algorithme SAMV (pour « itérative *Sparse Asymptotic Minimum Variance* »), la méthode MLE (pour « *Maximum Likelihood Estimation* »), la méthode ESPRIT (pour « *Estimation of Signal Parameters via Rotational Invariant Techniques* »)*,* etc.

On décrit maintenant plus précisément le procédé de sélection selon l'invention.

Comme on l'a vu, le premier procédé de reconnaissance vocale nécessite d'utiliser deux premiers microphones 9a uniquement parmi les six microphones 9 de l'enceinte connectée 1.

Le procédé de sélection a pour but de sélectionner, lorsque le premier procédé de reconnaissance vocale est utilisé, les deux premiers microphones 9a, parmi l'ensemble de microphones 3 de l'enceinte connectée 1, qui permettent de maximiser l'efficacité du premier procédé de reconnaissance vocale. Par « maximiser l'efficacité », on entend que les deux premiers microphones 9a sont ceux qui permettent d'obtenir la reconnaissance vocale la plus fiable et la plus précise. Le procédé de sélection selon l'invention est mis en oeuvre dans le composant de traitement 10 de l'enceinte connectée 1.

On note que, lorsque c'est le deuxième procédé de reconnaissance vocale qui est utilisé, il n'est pas nécessaire de sélectionner des microphones 9 puisque tous les microphones 9 de l'ensemble de microphones 3 sont utilisés.

Pour sélectionner les deux premiers microphones 9a, le composant de traitement 10 acquiert et mémorise, pour chaque microphone 9 de l'ensemble de microphones 3, un premier signal audio de référence produit par ledit microphone 9 à partir d'une réception par l'ensemble de microphones 3 d'un premier signal sonore de référence. Le premier signal sonore de référence est prononcé par l'utilisateur et comporte le premier mot-clef qui permet d'activer le premier procédé de reconnaissance vocale. Puis, le composant de traitement 10 analyse les premiers signaux audio de référence pour produire au moins un paramètre directionnel représentatif d'une direction d'arrivée du premier signal sonore de référence. Le composant de traitement 10 sélectionne alors, en fonction du ou des paramètres directionnels, parmi l'ensemble de microphones 3, les deux premiers microphones 9a qui permettent de maximiser l'efficacité du premier procédé de reconnaissance vocale.

La sélection de la paire de premiers microphones 9a est donc effectuée en fonction de la direction d'où est venu le mot-clef.

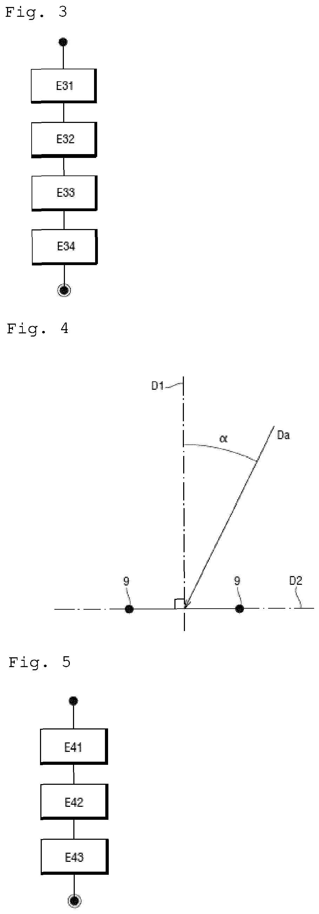

On décrit maintenant, en référence aux figures 3 et 4, le procédé de sélection selon un premier mode de réalisation ne faisant pas partie de l'invention.

Le procédé de sélection est donc mis en oeuvre lorsque le module de détection 6 de l'enceinte connectée 1 a détecté que l'utilisateur a prononcé le premier mot-clef pour activer le premier procédé de reconnaissance vocale.

Le composant de traitement 10 acquiert et mémorise les premiers signaux audio de référence, puis les analyse.

Le composant de traitement 10 détermine, en utilisant les premiers signaux audio de référence produits par l'ensemble de microphones 3, la direction d'arrivée Da du premier signal sonore de référence intégrant le premier mot-clé (étape E31). Le composant de traitement 10 applique pour cela un procédé de *DoA* aux premiers signaux audio de référence provenant de tous les microphones 9 de l'ensemble de microphones 3.

Puis, le composant de traitement 10 définit des paires de microphones 9 dans l'ensemble de microphones.

Avantageusement, mais pas nécessairement, les deux microphones 9 de chaque paire de microphones présentent le même écartement. Chaque microphone 9 de l'ensemble de microphones 3 peut faire partie d'une ou de plusieurs paires, ou bien ne faire partie d'aucune paire.

Pour chaque paire de microphones 9 de l'ensemble de microphones 3, le composant de traitement 10 calcule une différence angulaire α entre la direction d'arrivée Da et une direction D1 perpendiculaire à une direction D2 passant par les microphones 9 de ladite paire de microphones 9 (étape E32).

La direction d'arrivée Da et les différences angulaires α sont les paramètres directionnels qui ont été évoqués plus tôt.

Le composant de traitement 10 sélectionne alors, comme premiers microphones 9a, les deux microphones 9 de la paire de microphones 9 qui présente la plus petite différence angulaire (étape E33).

Suite à la sélection des premiers microphones 9a, le composant de traitement 10 transmet au premier module de reconnaissance vocale (sur le *cloud)* en utilisant le module de communication 5 les premiers signaux audio de commande produits par lesdits premiers microphones 9a (et uniquement par les premiers microphones 9a) : étape E34.

Les premiers signaux audio de commande sont alors utilisés par le premier module de reconnaissance vocale pour mettre en oeuvre le premier procédé de reconnaissance vocale. Les premiers signaux audio de commande sont les signaux produits par les premiers microphones 9a lorsque ceux-ci captent les commandes vocales prononcées par l'utilisateur suite à la prononciation du premier mot-clé.

Le procédé de sélection est donc nettement plus efficace qu'un procédé de sélection qui sélectionnerait de manière statique, définitive, les microphones. Par exemple, dans le cas où les six microphones sont disposés en cercle régulier, le choix statique de deux microphones diamétralement opposés et parallèles à la face avant de l'enceinte connecté est la solution optimale lorsque l'utilisateur se trouve face à l'enceinte connectée, mais la qualité de la reconnaissance vocale décroît lorsque l'utilisateur ne se trouve pas en face de l'enceinte connectée. Ici, le procédé de sélection selon l'invention permet d'optimiser le choix des premiers microphones dynamiquement, en tenant compte de la direction d'arrivée du premier signal sonore de référence.

On décrit maintenant, en référence à la figure 5, le procédé de sélection selon un deuxième mode de réalisation ne faisant pas partie de l'invention.

Le procédé de sélection est mis en oeuvre lorsque le module de détection 6 de l'enceinte connectée 1 a détecté que l'utilisateur a prononcé le premier mot-clef.

Le composant de traitement 10 acquiert et mémorise les premiers signaux audio de référence, puis les analyse.

Pour chaque paire de microphones 9 de l'ensemble de microphones 3, le composant de traitement 10 calcule une valeur de corrélation entre les premiers signaux audio de référence produits par les deux microphones 9 de ladite paire de microphones 9 (étape E41). Les valeurs de corrélation sont les paramètres directionnels qui ont été évoqués plus tôt. La corrélation est en effet maximale lorsque le son provient exactement de la direction perpendiculaire à la paire de microphones 9, et minimale lorsque le son provient d'une direction exactement alignée avec les microphones 9.

Le composant de traitement 10 sélectionne alors comme premiers microphones 9a les deux microphones 9 de la paire de microphones 9 qui présente la valeur de corrélation la plus élevée (étape E42).

Suite à la sélection des premiers microphones 9a, le composant de traitement 10 transmet au premier module de reconnaissance vocale (sur le *cloud*) en utilisant le module de communication 5 les premiers signaux audio de commande produits par lesdits premiers microphones 9a (et uniquement par les premiers microphones 9a) : étape E43.

Les premiers signaux audio de commande sont alors utilisés par le premier module de reconnaissance vocale pour mettre en oeuvre le premier procédé de reconnaissance vocale.

On note que les valeurs de corrélation sont des paramètres directionnels pertinents et suffisants.

Il n'est en effet pas nécessaire dans l'invention de connaître précisément la direction d'arrivée du premier signal sonore de référence : il est suffisant de connaître la paire de microphones 9 qui a pour perpendiculaire la direction la plus proche de la direction d'arrivée.

La mise en oeuvre du procédé de sélection selon le deuxième mode de réalisation de l'invention est moins coûteuse que celle du procédé de sélection selon le premier mode de réalisation de l'invention, car elle ne nécessite pas de procédé de *DoA* qui peut être un procédé coûteux.

On décrit maintenant le procédé de sélection selon un troisième mode de réalisation de l'invention.

De manière préliminaire, on s'intéresse au procédé de formation de voies mis en oeuvre par le module de reconnaissance vocale (sur le *cloud).*

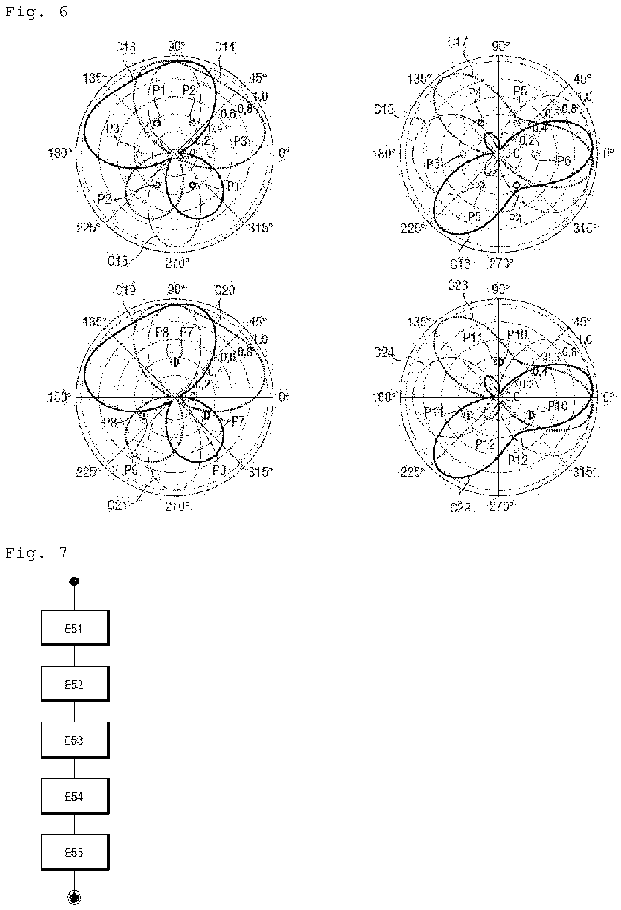

Les deux diagrammes de sensibilité du haut de la figure 6 correspondent à une disposition à six microphones en cercle. Les six microphones sont regroupés en trois paires composées chacune de deux microphones diamétralement opposés.

Les deux diagrammes de sensibilité du bas de la figure 6 correspondent à une disposition à trois microphones en triangle. Les trois microphones 9 sont regroupés en trois paires correspondant aux trois côtés du triangle.

Sur les deux graphiques de gauche, le procédé de formation de voies est configuré pour écouter dans la direction 90°.

Sur les deux graphiques de droite, le procédé de formation de voies est configuré pour écouter dans la direction 0°.

Sur le graphique en haut à gauche, la courbe C13 correspond à la paire de microphones P1, la courbe C14 correspond à la paire de microphones P2, la courbe C15 correspond à la paire de microphones P3.

Sur le graphique en haut à droite, la courbe C16 correspond à la paire de microphones P4, la courbe C17 correspond à la paire de microphones P5, la courbe C18 correspond à la paire de microphones P6.

Sur le graphique en bas à gauche, la courbe C19 correspond à la paire de microphones P7, la courbe C20 correspond à la paire de microphones P8, la courbe C21 correspond à la paire de microphones P9.

Sur le graphique en bas à droite, la courbe C22 correspond à la paire de microphones P10, la courbe C23 correspond à la paire de microphones P11, la courbe C24 correspond à la paire de microphones P12.

Comme on l'a déjà vu, dans l'invention, lorsque le module de détection 6 de l'enceinte connectée 1 détecte que l'utilisateur a prononcé le premier mot-clef, le composant de traitement 10 sélectionne une paire de premiers microphones 9a en fonction de la direction d'arrivée du premier signal sonore de référence contenant le premier mot-clef, et envoie les premiers signaux audio de commande provenant de ces deux premiers microphones 9a au premier module de reconnaissance vocale pour mettre en oeuvre le premier procédé de reconnaissance vocale. Le premier module de reconnaissance vocale applique alors le premier procédé de formation de voies.

Par exemple, si le composant de traitement 10 de l'enceinte connectée 1 détecte que le premier mot-clef est venu de la direction 90°, alors l'enceinte connectée 1 enverra les premiers signaux audio de commande provenant des deux microphones de l'une des paires P3 ou P9 (cas correspondant aux deux graphiques de gauche). L'application du procédé de formation de voies permettra au module de reconnaissance vocale d'obtenir l'une des courbes C15 ou C21.

Par contre, si le composant de traitement 10 de l'enceinte connectée 1 détecte que le premier mot-clef est venu de la direction 0°, alors l'enceinte connectée 1 enverra les premiers signaux audio de commande provenant soit des deux microphones de l'une des paires P4 ou P10, soit des deux microphones de l'une des paires P5 ou P11 (cas correspondant aux deux graphiques de droite) afin que le module de reconnaissance vocale obtienne le meilleur diagramme de sensibilité dans chaque situation.

On voit sur la figure 6 que le diagramme de sensibilité de chaque paire de microphones 9 présente des lobes secondaires importants, c'est-à-dire que le signal de sortie produit par le procédé de formation de voies comporte une part importante provenant d'au moins une direction autre que la direction focalisée. Par exemple, sur les diagrammes de sensibilité de droite de la figure 6, lorsque le procédé de formation de voies est focalisé vers la direction 0°, les paires de microphones P5 et P11 sont sensibles aux sons provenant des directions 0° et 130° tandis que les paires de microphones P4 et P10 sont sensibles aux sons provenant des directions 0° et 230°. Par conséquent, il semble préférable de choisir l'une des paires de microphones P4 ou P10 s'il y a une source sonore perturbatrice dans la direction 130°, et, au contraire, il semble préférable de choisir l'une des paires de microphones P5 ou P11 s'il y a une source sonore perturbatrice dans la direction 230°. Il peut même être préférable de choisir l'une des paires de microphones P6 ou P12 bien qu'elles soient a priori moins sélectives s'il y a des sources perturbatrices dans les directions 130° et 230°.

En référence à la figure 7, le procédé de sélection selon un mode de réalisation de l'invention vise à prendre en compte ces perturbations, et à sélectionner la paire de premiers microphones 9a qui permettra au premier module de reconnaissance vocale de maximiser l'efficacité du premier procédé de reconnaissance vocale en anticipant les résultats du procédé de formation de voies utilisé par le premier module de reconnaissance vocale.

Le procédé de sélection est donc mis en oeuvre lorsque le module de détection 6 de l'enceinte connectée 1 a détecté que l'utilisateur a prononcé le premier mot-clef pour activer le premier procédé de reconnaissance vocale.

Le composant de traitement 10 acquiert et mémorise les premiers signaux audio de référence produits par l'ensemble de microphones 3, puis les analyse.

Le composant de traitement 10 détermine, en utilisant les premiers signaux audio de référence, la direction d'arrivée du premier signal sonore de référence intégrant le premier mot-clé (étape E51). Le composant de traitement 10 applique pour cela un procédé de *DoA* aux premiers signaux audio de référence provenant de tous les microphones 9 de l'ensemble de microphones 3.

Puis, pour chaque paire de microphones 9 de l'ensemble de microphones 3, le composant de traitement 10 configure un module de formation de voies 12 (qui met en oeuvre un procédé de formation de voies) utilisant les microphones 9 de ladite paire de microphones 9 pour focaliser le module de formation de voies 12 dans la direction d'arrivée (étape E52). Le module de formation de voies 12 est visible sur la figure 1.

A l'étape E53, le composant de traitement 10 applique alors en entrée du module de formation de voies 12 les premiers signaux audio de référence produits par les deux microphones 9 de ladite paire de microphones 9, et acquiert un signal de sortie du module de formation de voie 12.

Le composant de traitement 10 applique alors un procédé de détection (en utilisant le module de détection 6) visant à détecter le premier mot-clef dans le signal de sortie, et confère à la paire de microphones un score de confiance quantifiant une probabilité de détection du premier mot-clef .

Le composant de traitement 10 confère donc à chaque paire de microphones 9 de l'ensemble de microphones 3 un score de confiance allant ici de 0% (le premier mot-clef n'est pas détecté) à 100% (le premier mot-clef est détecté sans aucun doute). On note que, lors d'un usage traditionnel du détecteur de mot-clef, on comparerait ce score de confiance avec un seuil pour produire une décision binaire « mot-clef détecté » ou non. Ici, on utilise directement le score de confiance.

Le composant de traitement 10 sélectionne alors comme premiers microphones 9a les deux microphones 9 de la paire de microphones 9 qui présente le score de confiance le plus élevé (étape E54).

Dans le troisième mode de réalisation de l'invention, la qualité de réception du mot-clef est donc utilisée pour évaluer la paire de microphones qui permettra d'obtenir la reconnaissance vocale la plus efficace (en tenant compte de l'utilisation du procédé de formation de voies).

Suite à la sélection des premiers microphones 9a, le composant de traitement 10 transmet au premier module de reconnaissance vocale (sur le *cloud)* en utilisant le module de communication 5 les premiers signaux audio de commande produits par lesdits premiers microphones 9a (et uniquement par les premiers microphones 9a) : étape E55.

Bien entendu, l'invention n'est pas limitée aux modes de réalisation décrits mais englobe toute variante entrant dans le champ de l'invention telle que définie par les revendications.

Le module de reconnaissance vocale n'est pas nécessairement mis en oeuvre dans un ou des équipements externes déportés comme c'est le cas ici pour le ou les serveurs du *cloud.* Le module de reconnaissance vocale pourrait être mis en oeuvre dans l'enceinte connectée 1, par exemple dans le module de traitement 4.

Le nombre et la disposition des microphones 9 pourraient bien sûr être différents. L'enceinte connectée 1 pourrait par exemple comporter quatre microphones disposés en « *trilium* » (c'est-à-dire trois microphones disposés en triangle et un quatrième microphone au centre), comme sur le graphique en bas à gauche de la figure 2, ou bien trois microphones.

L'enceinte connectée 1 pourrait être utilisée pour mettre en oeuvre un nombre quelconque de procédé(s) de reconnaissance vocale.

L'architecture de l'enceinte connectée 1 peut être différente de celle décrite ici. Le module de détection 6 n'est par exemple pas nécessairement programmé dans le composant de traitement 10.

L'invention peut être mise en oeuvre dans tout équipement électronique comprenant des microphones et pouvant être utilisé pour mettre en oeuvre un procédé de reconnaissance vocale : assistant vocal, boîtier décodeur, tablette, *smartphone,* etc.

**Revendications**

1. Procédé de sélection, mis en oeuvre dans un équipement électronique (1) qui comporte un ensemble de microphones (3) comprenant un nombre total de microphones (9) et qui est utilisé pour mettre en oeuvre un premier procédé de reconnaissance vocale nécessitant un premier nombre de premiers microphones (9a) inférieur strictement au nombre total de microphones, le premier nombre étant égal à deux, le procédé de sélection comprenant les étapes de :

- acquérir et mémoriser, pour chaque microphone (9) de l'ensemble de microphones (3), un premier signal audio de référence produit par ledit microphone à partir d'une réception par l'ensemble de microphones d'un premier signal sonore de référence, le premier signal sonore de référence comportant un premier mot-clef activant le premier procédé de reconnaissance vocale ;
- analyser les premiers signaux audio de référence pour produire au moins un paramètre directionnel représentatif d'une direction d'arrivée (Da) du premier signal sonore de référence ;
- sélectionner en fonction du ou des paramètres directionnels, parmi l'ensemble de microphones, les premiers microphones qui permettent de maximiser une efficacité du premier procédé de reconnaissance vocale,

l'étape d'analyse comprenant les étapes de :

- déterminer, en utilisant les premiers signaux audio de référence produits par l'ensemble de microphones (3), la direction d'arrivée (Da) du premier signal sonore de référence ;
- définir parmi l'ensemble de microphones des paires de microphones et, pour chaque paire de microphones :

  ∘ configurer un module de formation de voies (12) utilisant les microphones de ladite paire de microphones pour focaliser le module de formation de voies dans la direction d'arrivée ;
  ∘ appliquer en entrée du module de formation de voies les premiers signaux audio de référence produits par les deux microphones de ladite paire de microphones, et acquérir un signal de sortie du module de formation de voie ;
  ∘ appliquer un procédé de détection visant à détecter le premier mot-clef dans le signal de sortie, et conférer à la paire de microphones un score de confiance quantifiant une probabilité de détection du premier mot-clef ;

et l'étape de sélection consistant à sélectionner comme premiers microphones les deux microphones de la paire de microphones qui présente le score de confiance le plus élevé.

2. Procédé de sélection selon la revendication 1, dans lequel les deux microphones (9) de chaque paire de microphones présentent un même écartement.

3. Procédé de sélection selon l'une des revendications précédentes, dans lequel au moins trois microphones (9) de l'ensemble de microphones ne sont pas alignés.

4. Procédé de sélection selon l'une des revendications précédentes, dans lequel l'équipement électronique (1) peut aussi être utilisé pour mettre en oeuvre un deuxième procédé de reconnaissance vocale nécessitant un deuxième nombre de deuxièmes microphones égal au nombre total de microphones (9) .

5. Procédé de sélection selon l'une des revendications précédentes, dans lequel le premier procédé de reconnaissance vocale est mis en œuvre dans un ou des équipements externes distincts de l'équipement électronique (1), le procédé de sélection comprenant l'étape, suite à la sélection des premiers microphones (9a), de transmettre au ou aux équipements externes uniquement des premiers signaux audio de commande produits par lesdits premiers microphones suite aux premiers signaux audio de référence, lesdits premiers signaux audio de commande étant utilisés par le ou les équipements externes pour mettre en oeuvre le premier procédé de reconnaissance vocale.

6. Equipement électronique comportant un composant de traitement (10) et un ensemble de microphones (3) comprenant un nombre total de microphones (9), l'équipement électronique étant agencé pour être utilisé pour mettre en œuvre un premier procédé de reconnaissance vocale nécessitant un premier nombre de premiers microphones (9a) inférieur strictement au nombre total de microphones, le composant de traitement étant agencé pour mettre en oeuvre le procédé de sélection selon la revendication 1.

7. Equipement électronique selon la revendication 6, dans lequel le composant de traitement est agencé pour mettre en œuvre le procédé de sélection selon la revendication 2, les deux microphones (9) de chaque paire de microphones présentant un même écartement.

8. Equipement électronique selon la revendication 6 dans lequel le composant de traitement est agencé pour mettre en œuvre le procédé de sélection selon la revendication 3, au moins trois microphones (9) de l'ensemble de microphones n'étant pas alignés.

9. Equipement électronique selon la revendication 6 dans lequel le composant de traitement est agencé pour mettre en œuvre le procédé de sélection selon la revendication 4, l'équipement électronique (1) pouvant aussi être utilisé pour mettre en oeuvre le deuxième procédé de reconnaissance vocale nécessitant le deuxième nombre de deuxièmes microphones égal au nombre total de microphones.

10. Equipement électronique selon la revendication 6 dans lequel le composant de traitement est agencé pour mettre en œuvre le procédé de sélection selon la revendication 5.

11. Equipement électronique selon l'une des revendications 6 à 10, l'équipement électronique étant une enceinte connectée.

12. Programme d'ordinateur comprenant des instructions qui conduisent le composant de traitement (10) de l'équipement électronique (1) selon l'une des revendications 6 à 11 à exécuter les étapes du procédé de sélection selon l'une des revendications 1 à 5.

13. Support d'enregistrement lisible par ordinateur, sur lequel est enregistré le programme d'ordinateur selon la revendication 12.

**Patentansprüche**

1. Auswahlverfahren, das in einer elektronischen Ausrüstung (1) durchgeführt wird, die einen Satz (3) von Mikrophonen umfasst, der eine Gesamtanzahl von Mikrophonen (9) umfasst, und die verwendet wird, um ein erstes Spracherkennungsverfahren zu implementieren, das eine erste Anzahl von ersten Mikrophonen (9a) erfordert, die streng unter der Gesamtanzahl von Mikrophonen ist, wobei die erste Anzahl gleich zwei ist, wobei das Auswahlverfahren die Schritte umfasst:

- Erfassen und Speichern für jedes Mikrophon (9) des Satzes (3) von Mikrophonen eines ersten Referenzaudiosignals, das von dem genannten Mikrophon aus dem Empfang eines ersten Referenztonsignals durch den Satz von Mikrophonen erzeugt wird, wobei das erste Referenztonsignal ein erstes Schlüsselwort umfasst, welches das erste Spracherkennungsverfahren aktiviert;
- Analysieren der ersten Referenzaudiosignale, um mindestens einen Richtungsparameter zu erzeugen, der repräsentativ für eine Ankunftsrichtung (Da) des ersten Referenztonsignals ist;
- Auswählen, abhängig von dem oder der Richtungsparameter, unter dem Satz von Mikrophonen, der ersten Mikrophone, die das Maximieren einer Wirksamkeit des ersten Spracherkennungsverfahrens ermöglichen;

wobei der Analyseschritt die Schritte umfasst:

- Bestimmen unter Verwendung der ersten Referenzaudiosignale, die von dem Satz (3) von Mikrophonen erzeugt werden, der Ankunftsrichtung (Da) des ersten Referenztonsignals;
- Definieren von Paaren von Mikrophonen aus dem Satz von Mikrophonen und für jedes Paar von Mikrophonen:

  ◦ Konfigurieren eines Pfadbildungsmoduls (12), das die Mikrophone des genannten Paares von Mikrophonen verwendet, um das Pfadbildungsmodul in der Ankunftsrichtung zu fokussieren;
  ◦ Anlegen der ersten Referenzaudiosignale, die von den beiden Mikrophonen des genannten Paares von Mikrophonen erzeugt werden, am Eingang des Pfadbildungsmoduls und Erfassen eines Ausgangssignals des Pfadbildungsmoduls;
  ◦ Anwenden eines Detektionsverfahrens, das darauf abzielt, das erste Schlüsselwort in dem Ausgangssignal zu detektieren, und Zuweisen eines Vertrauensscores, der eine Detektionswahrscheinlichkeit des ersten Schlüsselworts quantifiziert, zu dem Paar von Mikrophonen;

und der Auswahlschritt darin besteht, als erste Mikrophone die beiden Mikrophone des Paares von Mikrophonen auszuwählen, das den höchsten Vertrauensscore aufweist.

2. Auswahlverfahren nach Anspruch 1, bei dem die beiden Mikrophone (9) jedes Paares von Mikrophonen einen selben Abstand aufweisen.

3. Auswahlverfahren nach einem der vorhergehenden Ansprüche, bei dem mindestens drei Mikrophone (9) des Satzes von Mikrophonen nicht ausgerichtet sind.

4. Auswahlverfahren nach einem der vorhergehenden Ansprüche, bei dem die elektronische Ausrüstung (1) auch verwendet werden kann, ein zweites Spracherkennungsverfahren durchzuführen, das eine zweite Anzahl von zweiten Mikrophonen erfordert, die gleich der Gesamtanzahl von Mikrophonen (9) ist.

5. Auswahlverfahren nach einem der vorhergehenden Ansprüche, bei dem das erste Spracherkennungsverfahren in einer oder mehreren externen Ausrüstungen durchgeführt wird, die von der elektronischen Ausrüstung (1) verschieden sind, wobei das Auswahlverfahren nach der Auswahl der ersten Mikrophone (9a) den Schritt des Übertragens nur der ersten Audiosteuersignale an die externe(n) Ausrüstung(en) umfasst, die von den genannten ersten Mikrophonen nach den ersten Referenzaudiosignalen erzeugt werden, wobei die genannten ersten Audiosteuersignale von der oder den externen Ausrüstungen verwendet werden, um das erste Spracherkennungsverfahren durchzuführen.

6. Elektronische Ausrüstung, umfassend eine Verarbeitungskomponente (10) und einen Satz (3) von Mikrophonen, der eine Gesamtanzahl von Mikrophonen (9) umfasst, wobei die elektronische Ausrüstung ausgebildet ist, verwendet zu werden, um ein erstes Spracherkennungsverfahren durchzuführen, das eine erste Anzahl von ersten Mikrophonen (9a) erfordert, die streng unter der Gesamtanzahl von Mikrophonen ist, wobei die Verarbeitungskomponente ausgebildet ist, das Auswahlverfahren nach Anspruch 1 durchzuführen.

7. Elektronische Ausrüstung nach Anspruch 6, bei der die Verarbeitungskomponente ausgebildet ist, das Auswahlverfahren nach Anspruch 2 durchzuführen, wobei die beiden Mikrophone (9) jedes Paares von Mikrophonen einen selben Abstand aufweisen.

8. Elektronische Ausrüstung nach Anspruch 6, bei der die Verarbeitungskomponente ausgebildet ist, das Auswahlverfahren nach Anspruch 3 durchzuführen, wobei mindestens drei Mikrophone (9) des Satzes von Mikrophonen nicht ausgerichtet sind.

9. Elektronische Ausrüstung nach Anspruch 6, bei der die Verarbeitungskomponente ausgebildet ist, das Auswahlverfahren nach Anspruch 4 durchzuführen, wobei die elektronische Ausrüstung (1) auch verwendet werden kann, das zweite Spracherkennungsverfahren durchzuführen, das die zweite Anzahl von zweiten Mikrophonen erfordert, die gleich der Gesamtanzahl von Mikrophonen ist.

10. Elektronische Ausrüstung nach Anspruch 6, bei der die Verarbeitungskomponente ausgebildet ist, das Auswahlverfahren nach Anspruch 5 durchzuführen.

11. Elektronische Ausrüstung nach einem der Ansprüche 6 bis 10, wobei die elektronische Ausrüstung ein Smart Speaker ist.

12. Computerprogramm, umfassend Anweisungen, die die Verarbeitungskomponente (10) der elektronischen Ausrüstung (1) nach einem der Ansprüche 6 bis 11 dazu veranlassen, die Schritte des Auswahlverfahrens nach einem der Ansprüche 1 bis 5 durchzuführen.

13. Computerlesbarer Aufzeichnungsträger, auf dem das Computerprogramm nach Anspruch 12 gespeichert ist.

## Claims

1. A selection method, implemented in electronic equipment (1) which comprises a set of microphones (3) comprising a total number of microphones (9) and which is used to implement a first voice recognition method requiring a first number of first microphones (9a) strictly less than the total number of microphones, the first number being equal to two, the selection method comprising steps consisting of:

   acquiring and memorizing, for each microphone (9) from the set of microphones (3), a first reference audio signal produced by said microphone from a reception by the set of microphones of a first reference sound signal, the first reference sound signal comprising a first keyword activating the first voice recognition method;
   analyzing the first reference audio signals to produce at least one directional parameter representative of a direction of arrival (Da) of the first reference sound signal;
   selecting, according to the directional parameter(s), from among the set of microphones, the first microphones which make it possible to maximize an effectiveness of the first voice recognition method

   the analysis step comprising steps consisting of:

   determining, by using the first reference audio signals produced by the set of microphones (3), the direction of arrival (Da) of the first reference sound signal;
   defining from among the set of microphones, pairs of microphones and, for each pair of microphones:

   configuring a path formation module (12) using the microphones of said pair of microphones to focus the path formation module in the direction of arrival;
   applying at the input of the path formation module, the first reference audio signals produced by the two microphones of said pair of microphones, and acquiring an output signal from the path formation module;
   applying a detection method aiming to detect the first keyword in the output signal, and conferring to the pair of microphones, a confidence score quantifying a probability of detecting the first keyword;

   and the selection step consisting of selecting as first microphones, the two microphones of the pair of microphones which has the highest confidence score.

2. The selection method according to claim 1, wherein the two microphones (9) of each pair of microphones have one same spacing.

3. The selection method according to any one of preceding claims, wherein at least three microphones (9) from the set of microphones are not aligned.

4. The selection method according to any one of preceding claims, wherein the electronic equipment (1) can also be used to implement a second voice recognition method requiring a second number of second microphones equal to the total number of microphones (9).

5. The selection method according to any one of preceding claims, wherein the first voice recognition method is implemented in one or more piece(s) of external equipment separate from the electronic equipment (1), the selection method comprising the step, following the selection of the first microphones (9a), consisting of transmitting at least the piece(s) of external equipment only from the first audio command signals produced by said first microphones following the first reference audio signals, said first audio command signals being used by the piece(s) of external equipment to implement the first voice recognition method.

6. An electronic equipment comprising a processing component (10) and a set of microphones (3) comprising a total number of microphones (9), the electronic equipment being arranged to be used to implement a first voice recognition method requiring a first number of first microphones strictly less than the total number of microphones, the processing component being arranged to implement the selection method according to claim 1.

7. An electronic equipment according to claim 6, wherein the processing component is arranged to implement the selection method according to claim 2, the two microphones (9) of each pair of microphones having one same spacing.

8. An electronic equipment according to claim 6, wherein the processing component is arranged to implement the selection method according to claim 3, at least three microphones (9) from the set of microphones not being aligned.

9. An electronic equipment according to claim 6, wherein the processing component is arranged to implement the selection method according to claim 4, the electronic equipment (1) being able to also be used to implement the second voice recognition method requiring the second number of second microphones equal to the total number of microphones.

10. An electronic equipment according to claim 6, wherein the processing component is arranged to implement the selection method according to claim 5.

11. The electronic equipment according any one of claims 6 to 10, the electronic equipment being a connected speaker.

12. A computer program comprising instructions which cause the processing component (10) of the electronic equipment according to any one of claims 6 to 11 to execute steps of a selection method according to any one of claims 1 to 5.

13. A computer-readable recording medium, on which the computer program according to claim 12 is recorded.

Fig. 1

Fig. 2

Fig. 3

Fig. 4

Fig. 5

Fig. 6

Fig. 7

**EP 4 064 725 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- KR 20190104950 A